# EUROPEAN PATENT SPECIFICATION

(11) **EP 1 197 011 B1**
(45) Date of publication and mention of the grant of the patent: **18.08.2004**
(21) Application number: 00942234.6
(22) Date of filing: 30.06.2000
(51) Int. Cl.: H04B 3/54, H02J 13/00, E21B 47/12

(54) **POWER LINE COMMUNICATION SYSTEM**
SYSTEM ZUR SIGNALÜBERTRAGUNG ÜBER STROMVERSORGUNGSLEITUNGEN
SYSTEME DE COMMUNICATION PAR COURANT PORTEUR EN LIGNE

(30) Priority: 01.07.1999 GB 9915298
(43) Date of publication of application: 17.04.2002
(73) Proprietor: The Autonomous Well Company Limited, West Lothian EH30 9SW (GB)
(72) Inventor: ROBERTSON, Mark, Patrick, West Lothian EH30 9SW (GB); HOSSACK, Graeme, Peter, Aberdeen AB14 0RN (GB)
(74) Representative: Newell, Campbell
(86) International application number: PCT/GB2000/002529
(87) International publication number: WO 2001/003323

(56) References cited:
- CA-A- 2 152 422
- US-A- 3 938 129
- US-A- 4 106 007
- US-A- 4 901 070
- US-A- 5 256 923
- US-A- 5 515 038
- US-A- 5 521 592

## Description

The present invention relates to a power line communication system and method. More particularly, the present invention relates to a power line communications system wherein the power frequency in.an inductive electric load (IEL) is used as a signal carrier. The invention is particularly suitable for use where the IEL is remote from the power supply such as, for example, in down hole oil production situations where very long power cables are used.

Power line communication systems are generally well known. One known system modulate the current from a main power supply to signal between units located on a common supply. The power supply is also used to power the devices and any other electrical load on the line, for example, an electric motor. Their mode of operation is to draw a modulated current in addition to the load current drawn and by placing a transmitter across the supply in parallel to other devices/loads. Such systems are therefore suitable for fitting to existing power systems where such devices may be used as a transmitter/receiver. Such systems do not convey information about the load but use the communications capabilities of the existing power system. Systems where a receiver can detect information by looking at current flow on the cable are disclosed in US.5581229, US 5589813, US 5621344 and US 5491463.

Other systems which are known and which are suitable for use in downhole applications having a single power supply line pass information between units by coupling an additional carrier onto the power supply line. Information is passed via the current flow between each transmitter/receiver pair and the receiver is a load for the transmitted current. Systems using this principle are disclosed in US 5539375, US 4620189, US 4631535, US 4631536, US 4523194, US 4157535, US 4365506, US 4178579 and US 3340500.

It is known that faults within a motor or other electrical load may change the time or frequency domain characteristics of a current drawn from a supply. This is due to the characteristics of the motor being altered due to the presence of faults. A source of such faults is short circuits between windings in an inductive (magnetically coupled) load. Such short circuits cause amplitude changes in the current and changes in the phase current cause imbalance in poly-phase machines. It is also known that mechanical faults in a rotor or bearing faults within a motor will cause changes in the frequency content of the current drawn by the motor. It is therefore possible to induce or mimic such faults to an extent that is not detrimental to the performance of the IEL to modulate a signal and thereby communicate information along a power line.

Previous methods used to provide communication devices are, for example, earthloop based communications. These types of devices ground a phase or neutral point through an impedance and communicate by passing a current around the formed loop, for example, down the phase cable and returned via earth. Such systems are susceptible to phase-to-earth faults. This can create a loss of communications and therefore cannot be used with earthed electrical systems.

IEL's are commonly used where multiple loads are supplied from one power supply and each IEL's feed is not galvanically isolated from other IEL feeds. A disadvantage of this method is that all ground loop communications will fail if any of the IEL's or their power feeds become grounded.

Other previously known methods require injection of a signal at the motor terminals using either direct, capacitive or inductive coupling techniques. A disadvantage of these types of methods is that if applied to a signal between phases rather than phase-to-earth, coupling is required between two motor terminals of potentially high voltage.

Previous communications systems have also been dependent as to whether the communication means is time-domain, digital or analogue, frequency keying, or amplitude or frequency or phase modulation.

Moreover, previous designs using earth loop communications have used various means of permitting insulation testing of the IEL whilst any communications device is fitted and rely on a high voltage switching relay or a negative biased high voltage diode. This is therefore a disadvantage as a special design is required to allow insulation testing.

Previous communications systems also require special high voltage filter or coupling devices to remove power frequencies which not only adds to the complexity and cost of the device, but also adds to its relative size.

Devices are well-known in the art which can be added to a power system, for example, in the home or office, wherein the devices are independent of the loads attached. These types of devices all modulate the current from a common main power supply. These devices draw a modulated current in addition to the load current being drawn by placing the transmitter across the electrical supply in parallel to any other load. It should be noted that these systems are not designed to convey information from the load, but to use the communications capabilities of the power system already in place and are of background relevance only.

It is therefore common for devices to require a dedicated source for communication between different units. The modulated AC or DC signal current is drawn from a coupled source voltage and not the general power supply voltage source: These previous types of devices therefore operate by filtering the power supply and passing information between units by coupling an additional carrier onto the power supply lines. Information is passed via a current flow between each transmitter/receiver pair on the bus.

US-A-4 901 070 discloses a pressure transducer supplied with a DC current super imposed on an AC power cable.

It is an object of at least one aspect of the present invention to obviate/mitigate one or more of the aforementioned problems and disadvantages in the prior art.

It is a further object of the present invention to provide a remote IEL wherein the IEL is a transformer, inductor, motor or other such device of single phase or poly-phase construction.

It is yet a further object of the present invention to provide a remote IEL which overcomes the cost and complexity of an additional cable for communication purposes.

It is also an object of the present invention to provide an IEL device which due to the lack of an independent cable is suitable for submersible pumps used for mine, sump and quarry de-watering and downhole oil production situations where previously the length of cable to the pump and inaccessibility would incur a large cost of installation and maintenance.

It is yet a further object of the present invention to provide an IEL device which is independent of earthing and will continue to transmit whilst power is applied to the IEL.

Another object of the present invention is to provide a potential between two windings in an IEL, wherein the potential between the windings is lower than the potential applied to the IEL.

A further object of the present invention is to provide a point in an IEL which has a low potential to earth (the neutral point of an earth neutral system or the neutral of an unearthed, fault-free poly-phase system) wherein there is a lack of high electrical stress from any of the components to earth potential under normal operating conditions.

Furthermore, it is an object of the present invention to provide information as a constituent of a power flow to an IEL. Information can therefore be communicated at all times that the IEL is powered.

It is a further object of the present invention to provide a secondary supply of lower potential wherein the secondary supply continues to modulate a powerflow, enabling information to be carried even though the secondary supply is incapable of powering the IEL.

Moreover, it is an object of the present invention to provide a system of transferring information which is a constituent of a power flow to an IEL which is unaffected by ground faults.

A yet further object of the present invention is to provide a system for transferring information which is a constituent of a power flow to an IEL wherein a receiver located on a feed to each IEL can easily detect a signal from each transmitter. Alternatively, it is a further object to provide a single receiver located on a common feed to all IELs, wherein the receiver filters out each of the signals being transmitted.

A further object of the present invention is to provide a method of transferring information as a constituent of a power flow which is independent of the modulation method. Moreover, it is an object that a plurality of signals are transmitted from one modulating transmitter and that more than one transmitter communicates per current drawn from the source.

It is a further object of the present invention to provide a method of transferring information as a constituent of a power flow wherein the system is independent of any galvanic isolation/connection of the electrical system or IEL to earth and as such needs no special design to permit insulation testing.

A further object of the present invention is to provide a method of transferring information as a constituent of a power flow wherein the system is capable of being installed in voids within an IEL as long as access to two windings of the IEL are available.

According to one aspect of the present invention there is provided a power line communications system including a power supply, a power line, a transmitter, an IEL powered by said power supply, and a receiver, said transmitter being electrically coupled to said inductive electrical load in a manner so as to receive from said power supply a transmitter voltage supply which is substantially less than the voltage supplied by the power supply to the inductive electrical load, wherein, in use, information is selectively transmitted/not transmitted from the transmitter to the receiver via the inductive electrical load on a power signal by selectively modulating/not modulating a portion of at least one electrical characteristic of the inductive electrical load, so as to selectively modulate/not modulate the current drawn from said power supply.

Preferably, the characteristics of the IEL which are altered include resistance, inductance and/or capacitance of any primary and/or secondary transformers, or a motor stator or rotor winding.

Preferably, multiple transmitters are used with each transmitter using a different modulation technique.

Advantageously, multiple transmitters are used with each transmitter using the same modulation technique, but each having different modulation modes within that technique.

It is preferred that the modulation is effected by an amplitude modulation technique.

Preferably, the amplitude modulation technique modulates the characteristics of the IEL such that changes in amplitude of the current or voltage in the power line can be detected.

Preferably, said transmitter for modulating the characteristics of the IEL comprises a modulation frequency generator. Desirably said transmitter is connected directly to the IEL.

It is preferred that the receiver is able to filter out and recover the transmitted information.

Preferably, the receiver is placed anywhere on the power line supplying power to the IEL and measures the power flow to the IEL and, with a de-modulator, measures the level of modulation of the power flow to the IEL created by the transmitter wherein the de-modulated signal is the information being transmitted.

Preferably, impedance and thereby leakage current between any two windings within an IEL is modulated by the transmitter to achieve the required power flow modulation.

Preferably, impedance and thereby leakage current between a plurality of windings within an IEL is modulated to achieve the required power flow modulation.

It is preferred that the communicated information is contained within a sequence of modulations created by the transmitter which are de-modulated and reconstructed by the receiver to recover the fully transmitted message.

Preferably, multiple consecutive or concurrent modulations occur in the same positive or negative half of current flow to the inductive electric load.

It is preferred that the power supply is not dedicated to communications and is principally intended for supplying power to the IEL except and where the main power supply is removed to cease operation of the IEL.

A secondary supply such as an AC or DC supply may be used with the intention of operating the communications system only.

Preferably, where the impedance is modulated the current flow therethrough is not rectified so as to provide a modulated power flow in both the positive and negative half-cycles of the current flow to the inductive electric load.

Advantageously, a current detection circuit is used to determine the zero crossing of a current flow to an inductive electric load in order that the modulation is activated only at pre-determined points of current flow.

A preferred feature is that the modulation time period is limited to a known pre-set value to reduce the power loss within the modulation circuit.

Preferably, the modulation is controlled by the temperature and power losses within the modulation circuit.
Preferably, the modulation time period is triggered to occur only at times of reduced current flow to the inductive load thereby reducing the power loss within the modulation circuit.

Preferably, the modulation time period is triggered to occur only at times of reduced voltage applied to the inductive electric load thereby reducing the power loss within the modulation circuit.

It is preferred that the transmitter includes a circuit similar to the receiver to provide feedback on the background noise at the modulation mode wherein the transmitter will actively alter the modulation technique or mode.

Moreover, it is preferred that the receiver includes a circuit to sweep modulation modes in order to detect if the transmitter has modified the modulation modes in order to increase the signal to noise ratio.

Furthermore, it is preferred that a voltage detection circuit is used to determine the zero crossing of the voltage applied to the IEL in order that modulations are activated only at fixed periods on the voltage waveform.

According to a second aspect of the present invention there is provided a method for transmitting information on a power line communications system including a power supply, a power line, a transmitter, an IEL powered by said power supply, and a receiver, wherein said transmitter is electrically coupled to said inductive electrical load in a manner so as to receive from said power supply a transmitter voltage supply which is substantially less than the voltage supplied by the power supply to the inductive electrical load, and wherein, in use, information is selectively transmitted/not transmitted from the transmitter to the receiver via the inductive electrical load on a power signal by selectively modulating/not modulating a portion of at least one electrical characteristic of the inductive electrical load, so as to selectively modulate/not modulate the current drawn from said power supply.
According to a third aspect of the present invention there is provided a PLC system according to the first and second aspects of the invention for use as an over-temperature system in a pump used for mine, pump and quarry de-watering and oil production.

Further preferred features and advantages of the present invention will now be described by way of example of some preferred embodiments illustrated with reference to the following drawings in which:
Figure 1 is an electrical system diagram of a power line transmission system according to the invention;
Figure 2 is a detailed circuit diagram for a transmitter for use in the system shown in Figure 1;
Figure 3 is an outline circuit diagram for a receiver for use in the system shown in Figure 1;
Figure 4 is a typical voltage waveform generated across two windings within a single phase of a three-phase motor;
Figure 5 is as Figure 4 with the phase windings current waveform superimposed, showing the inductive phase relationship causing a current to voltage lag;
Figure 6 is.a typical frequency spectrum for the current waveform shown in Figure 5, showing the location of the bandpass filter with no motor frequency components within the bandpass region;
Figure 7 is as Figure 5 with the addition of a modulated additional current flow during the time period where the voltage is positive; and
Figure 8 is as Figure 6 but shows the time period where modulation is on (as detailed in Figure 7) and shows the additional frequency component at the modulation f1.

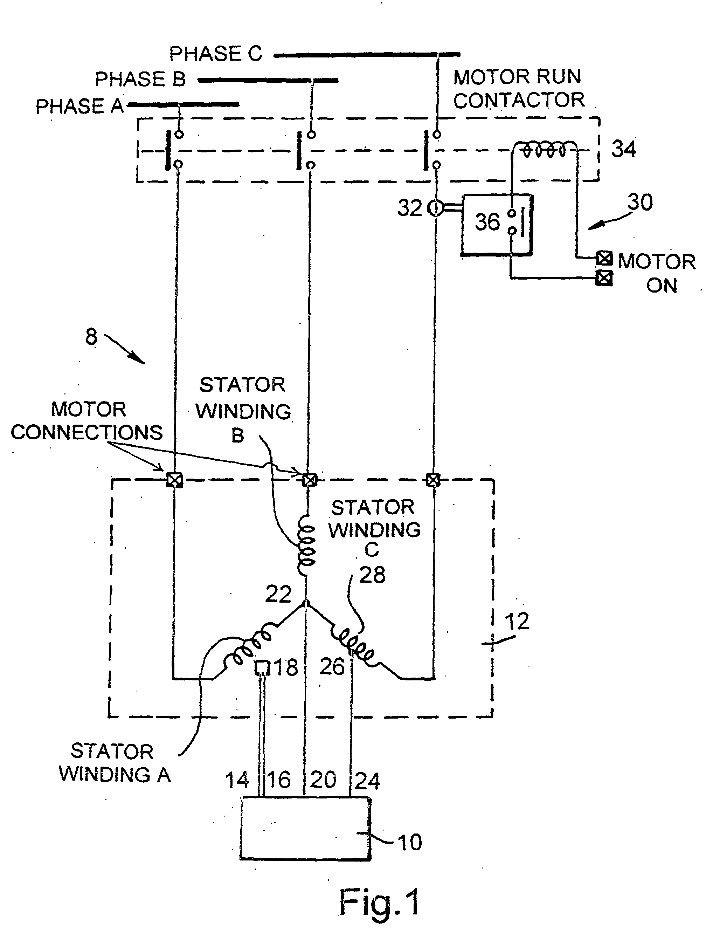

In Figure 1 is shown an over-temperature system 8 wherein there is a transmitter 10 connected to a three-phase, star wound induction motor 12 with 300 windings per phase and a phase to phase voltage requirement of 440 V AC rms.

The transmitter trigger input 14, 16 is connected to a normally open motor thermistor 18, in phase A, and a first modulation input 20, is connected to a neutral point 22 of the motor 12.

A second modulation input 24 is connected to a turn 26 of stator winding 28. To achieve a certain signal to noise ratio, turn 26 is the 270th turn in the stator winding 28, causing a voltage across the neutral point 22 and turn 26 of approximately 25.4 V AC rms.

A receiver 30 is located close to the power source. The receiver 30 has a current transformer 32 which is clamped around the same phase to that of the transmitter's second modulation input 24. In Figure 1 the modulation input 24 is in Phase C.

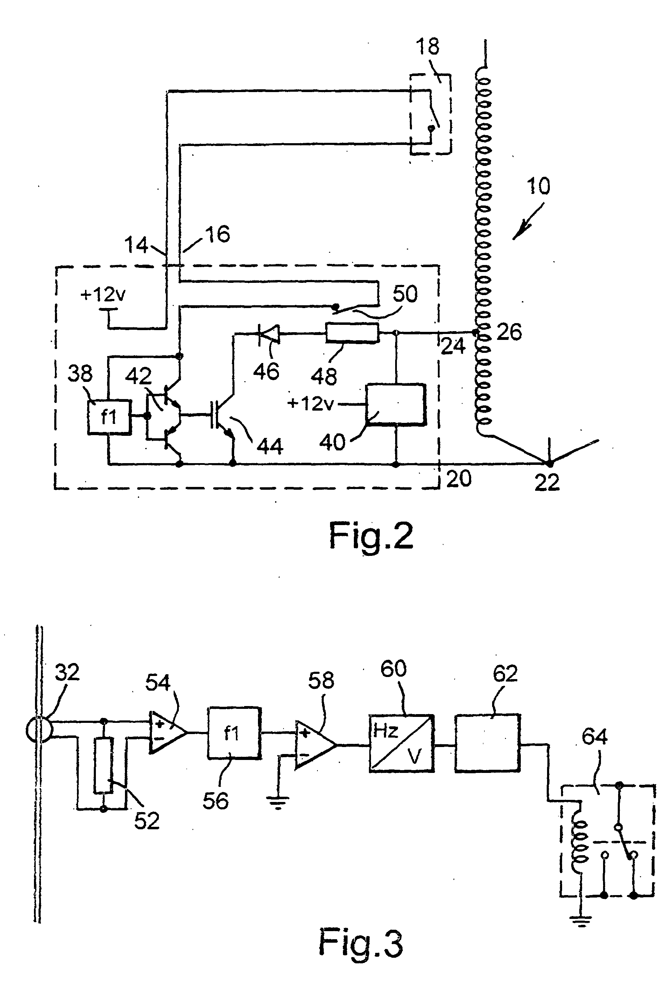

As shown in Figure 2, the transmitter 10 comprises a modulation frequency generator 38 providing frequency fl, a power supply 40 connected across the modulation inputs 20, 24, an amplifier 42 to drive a main modulating IGBT 44, a rectifier diode 46, a current limiting resistor 48 and a normally closed over-temperature thermistor 50 for the transmitter 10.

As shown in Figure 3, the receiver 30 comprises the current transformer input 32 and a load resistor 52 with a differential amplifier 54 feeding a bandpass filter 56 set with a frequency of fl (the modulation frequency of the transmitter). Output from the filter 56 is passed to a comparator 58 to drive a frequency to voltage converter 60 which operates a relay driver circuit 62. A standard latching time delay relay 64 is used to latch and hold for a pre-set time period whenever a signal is detected from the transmitter 10.

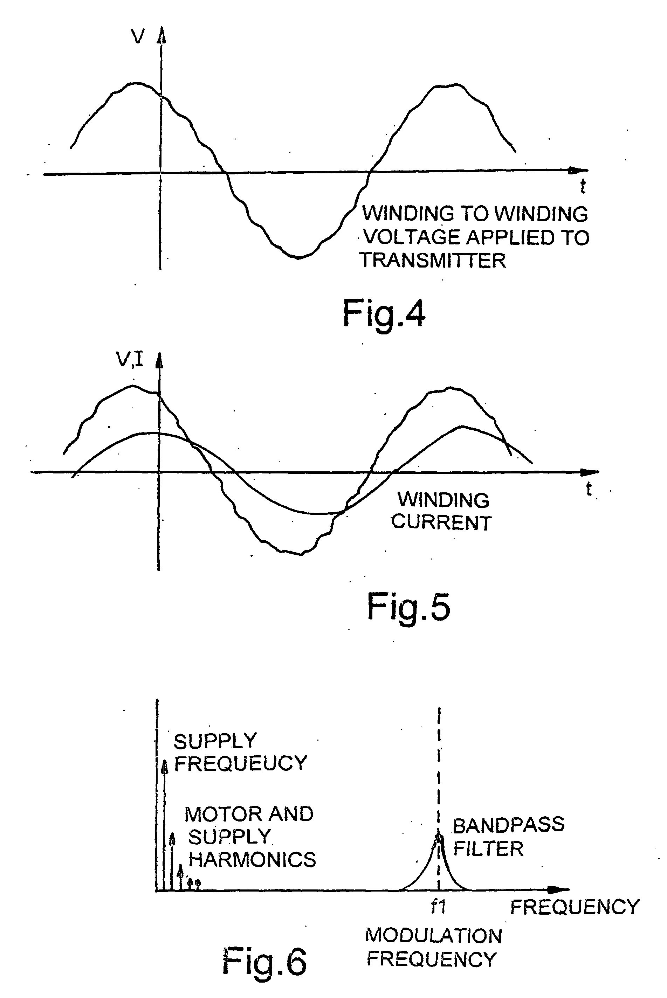

When the motor 12 is operating at a temperature which does not close the motor thermistor 18, the IGBT 44 is in the off position and there is no flow via the modulation circuit. The waveform across the modulation circuit is shown in Figure 4.

As shown in Figure 5, at the receiver 30, the voltage across the load resistor 52 is proportional to the total current flow.

In Figure 6, a frequency spectrum is shown which contains the fundamental power frequency and any harmonics. The bandpass filter 56 removes the components of this voltage not at or near the modulation frequency and the comparator 58 is switched off as the filter 56 output becomes too low. The relay 64 remains de-activated.

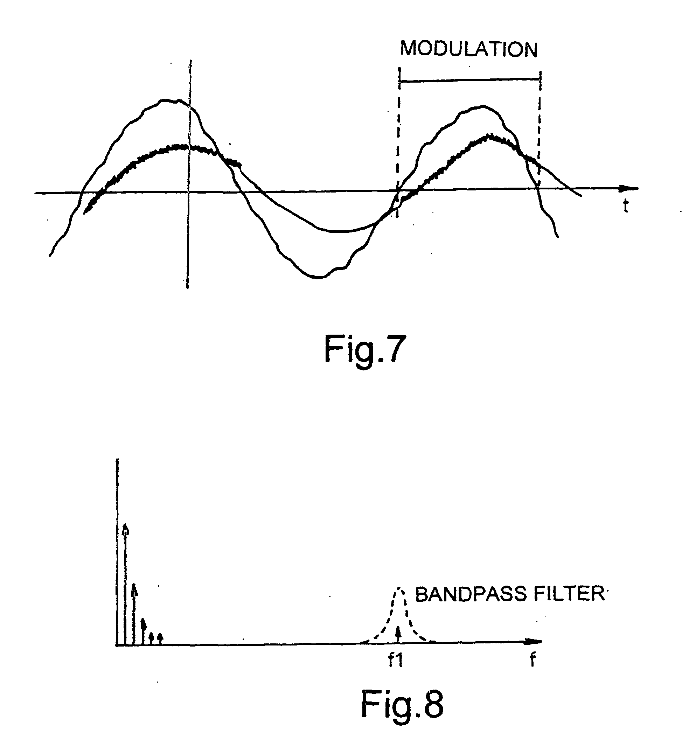

Figure 7 shows in addition to that of Figure 5 a modulated additional current flow during the time period where the voltage is positive.

Figure 8 shows in addition to that shown in Figure 6, the time period where modulation is on an additional frequency component at modulation f1.

If the motor 12 overheats', the motor thermistor 18 closes and both the frequency generator 38 and the drive circuit for the IGBT 44 become powered. Accordingly, the output of the modulation frequency generator 38 will drive the IGBT drive circuit 42 which will cause the IGBT 44 to be modulated and to conduct at frequency f1. During the period the IGBT 44 is conducting and the waveform across the transmitter terminals 20, 24 is positive, there will be current flow through the modulation circuit, limited to a value set by resistor 48. This causes reduction in apparent winding impedance creating a decrease in overall winding impedance and thereby an increase in current flow. This increase in current flow is modulated on and off by the IGBT 44 at frequency f1. Should the IGBT 44 or the limit resistor 52 overheat, either of the thermistors 18, 50 will switch off the modulation circuit and allow these devices to cool. Upon cooling, the modulation will occur again.

At the receiver 30, this modulated increase in current flow is converted to a modulated voltage across the load resistor 52 and into the bandpass filter 56. The filter input now has a spectrum that contains both the fundamental power frequency and harmonics and a spectral component at the modulation frequency. The bandpass filter 56 removes all but the modulation frequency causing a voltage input to the comparator 58. The comparator 58 outputs a frequency to the frequency to voltage converter. A voltage is output by the frequency to voltage converter to the relay driver 64 that will activate the latching relay thereby indicating motor 12 is over-temperature. Should the transmitter 10 shut down due to over-temperature, the relay 64 will remain latched. Additionally, should the relay 64 be used to shut down the motor 12 in an over-temperature state will remain latched to prevent restart until the relay 64 has timed out.

Alternatives of the above may be used when any number of transmitters modulate leakage resistance between two windings in a motor using a frequency modulation technique. The leakage resistance between two windings is altered at a modulation frequency, two or three orders of magnitude above the power supply frequency between the characteristic leakage resistance and a lower preset value. Although at the lower pre-set value of resistance some motor current bypasses the windings and thereby reduces the magnetising effect of the winding causing a change in the current drawn by the motor this results in the power flow to the IEL having a frequency content at the modulation frequency should the transmitter be on. The receiver is, for example, a current transformer around a power supply conductor wherein the output of the current transformer is passed through a bandpass filter to remove frequencies outside that of the transmitter's modulation frequency. If the output of the bandpass filter rises above a certain threshold value, then the transmitter is activated into an on position.

In any alternative embodiments, in order to achieve the required signal to noise ratio, the value of the modulated resistance and the proportion of the windings between which the invention is placed may be altered.

The present invention is particularly suitable for submersible pumps used for mine, sump and quarry de-watering and oil production where previously the length of the necessary communication cable to the pump and inaccessibility resulted in significant inconvenience and added cost to the device.

Various modifications may be made to the above described embodiment without departing from the scope of the present invention. Moreover the present invention is not restricted to use on new motors and pumps, as original equipment, but also lends itself to retro-fitting to completed motors already in use.

## Claims

1. A powerline communication system (8) including a power supply, a power line, a transmitter (10), an inductive electrical load (12) powered by said power supply, and a receiver (30), said transmitter being electrically coupled to said inductive electrical load (12) in a manner so as to receive from said power supply a transmitter voltage supply which is substantially less than the voltage supplied by the power supply to the inductive electrical load, wherein, in use, information is selectively transmitted/not transmitted from the transmitter (10) to the receiver (30) via the inductive electrical load (12) on a power signal by selectively modulating/not modulating a portion of at least one electrical characteristic of the inductive electrical load, so as to selectively modulate/not modulate the current drawn from said power supply.

2. A powerline communication system according to claim 1, wherein said transmitter includes temperature sensing means coupled to said inductive electrical load for sensing temperature and, in use, the transmitter responds to a predetermined temperature to create a control signal indicative of said temperature and where in response to said control signal, the transmitter transmits an information indicating that said predetermined temperature is sensed to the receiver via the inductive electrical load on a power signal by modulating said portion of at least one electrical characteristic of the inductive electrical load.

3. A powerline communication system (8) according to claim 1 or claim 2, wherein the characteristics of the inductive electrical load which are altered are resistance, inductance and/or capacitance of any primary and/or secondary transformers (32), or a motor stator or a rotor winding (28).

4. A powerline communication system (8) according to any preceding claim, wherein multiple transmitters (10) are used with each transmitter using a different modulation technique.

5. A powerline communication system (8) according to any preceding claim, wherein multiple transmitters are used with each transmitter using the same modulation technique, but each having different modulation modes within that technique.

6. A powerline communication system (8) according to any one of claims 1 to 5, wherein impedance and thereby leakage current between any two windings within an inductive electrical load is modulated to achieve the required power flow modulation.

7. A powerline communication system (8) according to any one of claims 1 to 6, wherein the communicated information is contained within a sequence of modulations from the transmitter which are demodulated and reconstructed by the receiver to recover the fully transmitted message.

8. A powerline communication system (8) according to any one of claims 1 to 7, wherein multiple consecutive or concurrent modulations occur in the same positive or negative half of current flow to the inductive electrical load.

9. A powerline communication system (8) according to any one of claims 1 to 8, wherein the modulation time period is limited to a known pre-set value to reduce the power loss within the modulation circuit.

10. A powerline communication system (8) according to any one of claims 1 to 9, wherein the modulation is controlled by the temperature and power losses within the modulation circuit.

11. A powerline communication system (8) according to any one of claims 1 to 10, wherein the modulation time period is triggered to occur only at times of reduced current flow to the inductive electrical load, thereby reducing the power loss within the modulation circuit.

12. A powerline communication system (8) according to any one of claims 1 to 11, wherein the modulation time period is triggered to occur only when a reduced voltage is supplied to the inductive electrical load, thereby reducing the power loss within the modulation circuit.

13. A powerline communication system (8) according to any one of claims 1 to 12, wherein the transmitter includes circuitry similar to the receiver circuitry formed and arranged to provide feedback on the background noise at the modulation mode, wherein the transmitter actively alters the modulation technique or mode.

14. A powerline communication system (8) according to any one of claims 1 to 13, wherein the receiver includes circuitry formed and arranged to sweep modulation modes to detect if the transmitter has modified the modulation modes in order to increase the signal to noise ratio.

15. A powerline communication system (8) according to any one of claims 1 to 14, wherein said transmitter voltage supply is approximately 6% of the voltage supply to the inductive electrical load.

16. A method for transmitting information on a powerline communications system (8), which system (8) includes a power supply, a power line, a transmitter (10), an inductive electrical load powered by said power supply, and a receiver (30), wherein said transmitter is electrically coupled to said inductive electrical load in a manner so as to receive from said power supply a transmitter voltage supply which is substantially less than the voltage supplied by the power supply to the inductive electrical load, and wherein, in use, information is selectively transmitted/not transmitted from the transmitter to the receiver via the inductive electrical load on a power signal by selectively modulating/not modulating a portion of at least one electrical characteristic of the inductive electrical load, so as to selectively modulate/not modulate the current drawn from said power supply.

17. Use of a powerline communication system (8) according to claim 2, as an over-temperature system in a pump used for mine, sump and quarry de-watering and oil production.

18. A motor (12), suitable for use with submersible pumps, which motor includes a transmitter (10) electrically coupled across some of the windings in said motor so as to receive, from a power supply powering the motor in use thereof, a transmitter voltage supply which is substantially less than the voltage supplied to the motor by said power supply, and wherein, in use, information is selectively transmitted/not transmitted from the transmitter via the motor on a power signal by selectively modulating/not modulating a portion of at least one electrical characteristic of said motor, so as to selectively modulate/not modulate the current drawn from said power supply by the motor.

19. A motor, as claimed in claim 18, coupled to a receiver on a said power line supplying power to said motor, said receiver being formed and arranged to receive information transmitted from said motor transmitter on a power signal on said power supply.

## Patentansprüche

1. Stromleitungskommunikationssystem (8), beinhaltend eine Spannungsversorgung, eine Stromleitung, einen Sender (10), eine induktive elektrische Last (12), die von der Spannungsversorgung versorgt wird, und einen Empfänger (30), wobei der Sender elektrisch mit der induktiven elektrischen Last (12) auf eine solche Weise gekoppelt ist, dass er von der Spannungsversorgung eine Versorgung mit Senderspannung empfängt, die wesentlich niedriger ist als die Spannung, die von der Spannungsversorgung an die induktive elektrische Last angelegt wird, wobei bei Gebrauch Information von dem Sender (10) an den Empfänger (30) durch die induktive elektrische Last (12) auf einem Spannungssignal wahlweise übertragen / nicht übertragen wird, indem ein Abschnitt wenigstens einer elektrischen Kenngröße einer der induktiven elektrischen Last wahlweise moduliert / nicht moduliert wird, so dass der Strom, der der Spannungsquelle entnommen wird, wahlweise moduliert / nicht moduliert wird.

2. Stromleitungskommunikationssystem nach Anspruch 1, wobei der Sender temperaturfühlende Mittel beinhaltet, die mit der induktiven elektrischen Last gekoppelt sind, um die Temperatur zu fühlen, und wobei der Sender bei Gebrauch auf eine vorgegebene Temperatur antwortet, um ein Steuerungssignal zu bilden, das die Temperatur anzeigt, und wobei der Sender in Antwort auf das Steuerungssignal eine Information, die anzeigt, dass die vorbestimmte Temperatur gefühlt wird, durch die induktive elektrische Last auf einem Spannungssignal an den Empfänger sendet, indem er den Abschnitt der wenigstens einen elektrischen Kenngröße der induktiven elektrischen Last moduliert.

3. Stromleitungskommunikationssystem (8) nach Anspruch 1 oder 2, wobei die Kenngrößen der induktiven elektrischen Last, die geändert werden, Widerstand, Induktivität und/oder Kapazität eines primären oder sekundären Transformators (32), oder ein Motorstator oder eine Rotorwickelung (28) sind.

4. Stromleitungskommunikationssystem (8) nach einem der vorstehenden Ansprüche, wobei mehrere Sender (10) verwendet werden, wobei jeder Sender eine andere Modulationstechnik verwendet.

5. Stromleitungskommunikationssystem (8) nach einem der vorstehenden Ansprüche, wobei mehrere Sender verwendet werden, wobei jeder Sender dieselbe Modulationstechnik verwendet, aber jeder innerhalb dieser Technik andere Modulationsmoden aufweist.

6. Stromleitungskommunikationssystem (8) nach einem der Ansprüche 1 bis 5, wobei die Impedanz und dadurch der Leckstrom zwischen jeglichen zwei Wickelungen innerhalb einer induktiven elektrischen Last moduliert wird, um die erforderliche Stromflussmodulation zu erreichen.

7. Stromleitungskommunikationssystem (8) nach einem der Ansprüche 1 bis 6, wobei die kommunizierte Information innerhalb einer Sequenz von Modulationen des Senders enthalten ist, die von dem Empfänger demoduliert und rekonstruiert werden, um die voll übertragene Nachricht wieder zu gewinnen.

8. Stromleitungskommunikationssystem (8) nach einem der Ansprüche 1 bis 7, wobei mehrere aufeinanderfolgende oder gleichzeitige Modulationen in derselben positiven oder negativen Hälfte vom Stromfluss an die induktive elektrische Last auftreten.

9. Stromleitungskommunikationssystem (8) nach einem der Ansprüche 1 bis 8, wobei die Modulationsdauerperiode auf einen bekannten voreingestellten Wert begrenzt ist, um den Leistungsverlust innerhalb des Modulationsschaltkreises zu verringern.

10. Stromleitungskommunikationssystem (8) nach einem der Ansprüche 1 bis 9, wobei die Modulation durch Temperatur und Leistungsverlust innerhalb des Modulationsschaltkreises gesteuert wird.

11. Stromleitungskommunikationssystem (8) nach einem der Ansprüche 1 bis 10, wobei die Modulationsdauerperiode so ausgelöst wird, dass sie lediglich zu Zeiten verringerten Stromflusses an die induktive elektrische Last auftritt, wodurch der Leistungsverlust innerhalb des Modulationsschaltkreises verringert wird.

12. Stromleitungskommunikationssystem (8) nach einem der Ansprüche 1 bis 11, wobei die Modulationsdauerperiode so ausgelöst wird, dass sie lediglich dann auftritt, wenn eine verringerte Spannung an die induktive elektrische Last angelegt wird, wodurch der Leistungsverlust innerhalb des Modulationsschaltkreises verringert wird.

13. Stromleitungskommunikationssystem (8) nach einem der Ansprüche 1 bis 12, wobei der Sender eine Schaltungsanordnung beinhaltet, die ähnlich der Empfängerschaltungsanordnung dazu ausgebildet und angeordnet ist, eine Rückkoppelung auf das Hintergrundrauschen bei dem Modulationsmodus bereitzustellen, wobei der Sender aktiv die Modulationstechnik oder den Modulationsmodus ändert.

14. Stromleitungskommunikationssystem (8) nach einem der Ansprüche 1 bis 13, wobei der Empfänger eine Schaltungsanordnung beinhaltet, die dazu ausgebildet und angeordnet ist, Modulationsmoden durchzufahren, um festzustellen, ob der Sender die Modulationsmoden geändert hat, um das Signal-zu-Rauschen-Verhältnis zu vergrößern.

15. Stromleitungskommunikationssystem (8) nach einem der Ansprüche 1 bis 14, wobei die Senderspannungsversorgung etwa 6 % der Spannungsversorgung der induktiven elektrischen Last ist.

16. Verfahren zum Übertragen von Information an ein Stromleitungskommunikationssystem (8), wobei das System (8) beinhaltet: Eine Spannungsversorgung, eine Stromleitung, einen Sender (10), eine induktive elektrische Last, die von der Spannungsversorgung versorgt wird, und einen Empfänger (30), wobei der Sender elektrisch mit der induktiven elektrischen Last auf eine solche Weise gekoppelt ist, dass er von der Spannungsversorgung eine Versorgung mit Senderspannung empfängt, die wesentlich niedriger als die Spannung ist, die von der Spannungsversorgung an die induktive elektrische Last angelegt wird, und wobei bei Gebrauch Information von dem Sender an den Empfänger durch die induktive elektrische Last auf eine Stromleitung wahlweise übertragen / nicht übertragen wird, indem ein Abschnitt von wenigstens einer elektrischen Kenngröße der elektrischen Last wahlweise moduliert / nicht moduliert wird, um so den Strom, der der Spannungsversorgung entnommen wird, wahlweise zu modulieren / nicht zu modulieren.

17. Verwendung eines Stromleitungskommunikationssystems (8) nach Anspruch 2 als ein Übertemperatursystem in einer Pumpe zur Verwendung beim Entwässern von Minen, Sümpfen und Gruben und beim Fördern von Öl.

18. Motor (12) der zur Verwendung mit Tauchpumpen geeignet ist, wobei der Motor einen Sender (10) beinhaltet, der elektrisch über einige der Wickelungen in dem Motor derart gekoppelt ist, dass er von einer Spannungsversorgung, die den Motor bei dessen Gebrauch versorgt, eine Versorgung mit Senderspannung empfängt, die wesentlich geringer als die Spannung ist, die von der Spannungsversorgung an den Motor angelegt wird, und wobei bei Gebrauch Information von dem Sender durch den Motor auf einem Spannungssignal wahlweise übertragen / nicht übertragen wird, indem ein Abschnitt wenigstens einer elektrischen Kenngröße des Motors solchermaßen moduliert / nicht moduliert wird, dass der Strom, den der Motor der Spannungsversorgung entnimmt, wahlweise moduliert / nicht moduliert wird.

19. Motor nach Anspruch 18, der an einen Empfänger auf einer der Stromleitungen gekoppelt ist, die den Motor mit Spannung versorgen, wobei der Empfänger so ausgebildet und angeordnet ist, dass er Information empfängt, die von dem Motorsender auf einem Spannungssignal auf der Spannungsversorgung übertragen wird.

## Revendications

1. Système de communication par courant porteur en ligne (8) incluant une alimentation électrique, une ligne de courant, un transmetteur (10), une charge électrique inductive (12) alimentée par ladite alimentation électrique, et un récepteur (30), ledit transmetteur étant couplé électriquement à ladite charge électrique inductive (12) d'une manière à recevoir en provenance de ladite alimentation électrique une alimentation en tension de transmetteur, qui est sensiblement inférieure à la tension fournie par l'alimentation électrique à la charge électrique inductive, dans lequel, en service, les informations sont sélectivement transmises/non transmises à partir du transmetteur (10) au récepteur (30) par l'intermédiaire de la charge électrique inductive (12) sur un signal de puissance, en modulant/ne modulant pas, sélectivement, une portion d'au moins une caractéristique électrique de la charge électrique inductive, de manière à moduler/ne pas moduler, sélectivement, le courant tiré de ladite alimentation électrique.

2. Système de communication par courant porteur en ligne selon la revendication 1, dans lequel ledit transmetteur inclut un moyen de détection de la température, couplé à ladite charge électrique inductive pour détecter une température et, en service, le transmetteur répond à une température prédéterminée pour créer un signal de commande, indicatif de ladite température, et où, en réponse audit signal de commande, le transmetteur transmet une information, indiquant que ladite température prédéterminée est détectée, au récepteur par l'intermédiaire de la charge électrique inductive sur un signal électrique, en modulant ladite portion d'au moins une caractéristique électrique de la charge électrique inductive.

3. Système de communication par courant porteur en ligne (8) selon la revendication 1 ou la revendication 2, dans lequel les caractéristiques de la charge électrique inductive qui sont modifiées sont la résistance, l'inductance et/ou la capacitance de tous transformateurs primaires et/ou secondaires (32) ou d'un stator de moteur ou d'un enroulement de rotor (28).

4. Système de communication par courant porteur en ligne (8) selon l'une quelconque des revendications précédentes, dans lequel des transmetteurs multiples (10) sont utilisés, chaque transmetteur utilisant une technique de modulation différente.

5. Système de communication par courant porteur en ligne (8) selon l'une quelconque des revendications précédentes, dans lequel des transmetteurs multiples sont utilisés, chaque transmetteur utilisant la même technique de modulation, mais chacun ayant des modes de modulation différents à l'intérieur de cette technique.

6. Système de communication par courant porteur en ligne (8) selon l'une quelconque des revendications 1 à 5, dans lequel l'impédance et, de ce fait, le courant de fuite entre deux enroulements à l'intérieur d'une charge électrique inductive est modulé pour obtenir la modulation requise de la circulation du courant.

7. Système de communication par courant porteur en ligne (8) selon l'une quelconque des revendications 1 à 6, dans lequel les informations communiquées sont contenues à l'intérieur d'une séquence de modulations en provenance du transmetteur, qui sont démodulées et reconstituées par le récepteur pour rétablir le message complètement transmis.

8. Système de communication par courant porteur en ligne (8) selon l'une quelconque des revendications 1 à 7, dans lequel des modulations multiples, consécutives ou concurrentes, se produisent dans la même moitié positive ou négative de la circulation du courant vers la charge électrique inductive.

9. Système de communication par courant porteur en ligne (8) selon l'une quelconque des revendications 1 à 8, dans lequel la période de modulation est limité à une valeur préréglée connue pour réduire la perte de courant à l'intérieur du circuit de modulation.

10. Système de communication par courant porteur en ligne (8) selon l'une quelconque des revendications 1 à 9, dans lequel la modulation est commandée par la température et les pertes de courant à l'intérieur du circuit de modulation.

11. Système de communication par courant porteur en ligne (8) selon l'une quelconque des revendications 1 à 10, dans lequel la période de modulation est déclenché de manière à se produire seulement aux moments de circulation réduite du courant vers la charge électrique inductive, en réduisant ainsi la perte de puissance à l'intérieur du circuit de modulation.

12. Système de communication par courant porteur en ligne (8) selon l'une quelconque des revendications 1 à 11, dans lequel le délai de.modulation est déclenché de manière à se produire seulement lorsqu'une tension réduite est amenée à la charge électrique inductive, en réduisant ainsi la perte de puissance à l'intérieur du circuit de modulation.

13. Système de communication par courant porteur en ligne (8) selon l'une quelconque des revendications 1 à 12, dans lequel le transmetteur inclut un circuit similaire au circuit du récepteur, formé et disposé de manière à fournir une rétroaction sur le bruit de fond au mode de modulation, dans lequel le transmetteur modifie activement la technique ou le mode de modulation.

14. Système de communication par courant porteur en ligne (8) selon l'une quelconque des revendications 1 à 13, dans lequel le transmetteur inclut un circuit formé et disposé de manière à explorer les modes de modulation pour détecter si le transmetteur a modifié les modes de modulation, afin d'augmenter le rapport signal/bruit.

15. Système de communication par courant porteur en ligne (8) selon l'une quelconque des revendications 1 à 14, dans lequel ladite alimentation en tension du transmetteur est approximativement 6 % de l'alimentation en tension de la charge électrique inductive.

16. Procédé de transmission d'informations sur un système de communication par courant porteur en ligne (8), système (8) qui inclut une alimentation électrique, une ligne de courant, un transmetteur (10), une charge électrique inductive alimentée par ladite alimentation électrique, et un récepteur (30), dans lequel ledit transmetteur est couplé électriquement à ladite charge électrique inductive d'une manière à recevoir en provenance de ladite alimentation électrique une alimentation en tension de transmetteur, qui est sensiblement inférieure à la tension fournie par l'alimentation électrique à la charge électrique inductive, dans lequel, en service, les informations sont sélectivement transmises/non transmises à partir du transmetteur au récepteur par l'intermédiaire de la charge électrique inductive sur un signal électrique, en modulant/ne modulant pas, sélectivement, une portion d'au moins une caractéristique électrique de la charge électrique inductive, de manière à moduler/ne pas moduler, sélectivement, le courant tiré de ladite alimentation électrique.

17. Utilisation d'un système de communication par courant porteur en ligne (8) selon la revendication 2, en tant que système de sur-température dans une pompe utilisée pour assèchement de mines, de puisards et de carrières et pour la production de pétrole.

18. Moteur (18) convenant pour utilisation avec des pompes submersibles, moteur qui inclut un transmetteur (10) électriquement couplé, à travers certains des enroulements dans ledit moteur, de manière à recevoir, en provenance d'une alimentation électrique alimentant le moteur en service, une alimentation en tension de transmetteur, qui est sensiblement inférieure à la tension fournie au moteur par ladite alimentation électrique, et dans lequel, en service, des informations sont sélectivement transmises/non transmises à partir du transmetteur, par l'intermédiaire du moteur, sur un signal électrique en modulant/ne modulant pas, sélectivement, une portion d'au moins une caractéristique électrique dudit moteur, de manière à moduler/ne pas moduler, sélectivement, le courant tiré de ladite alimentation électrique par le moteur.

19. Moteur selon la revendication 18, couplé à un récepteur sur une ligne de courant amenant un courant audit moteur, ledit récepteur étant formé et disposé de manière à recevoir les informations transmises à partir dudit transmetteur du moteur sur un signal de puissance sur ladite alimentation électrique.
